Europäisches Patentamt

**European Patent Office**

**Office européen des brevets**

(11) Publication number: **0 121 641**
A1

# EUROPEAN PATENT APPLICATION

(21) Application number: **83830075.4**

(51) Int. Cl.³: **B 62 D 25/18**

(22) Date of filing: **06.04.83**

(43) Date of publication of application: **17.10.84**
**Bulletin 84/42**

(84) Designated Contracting States: **AT BE CH DE FR GB LI NL SE**

(71) Applicant: **Schiraldi, Gaetano, Via Ercolano, 1, I-20155 Milano (IT)**

(72) Inventor: **Schiraldi, Gaetano, Via Ercolano, 1, I-20155 Milano (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **Fairing-fender structure, particularly for tractors of tractor semitrailers.**

(57) The fairing-fender structure comprises a flexible plate like element (1) effective to be arranged above each rear wheel (4) of the tractor and to be unwound from a winder device (2) as supported at the upper end of the rear wheel fender front portion (3), in such a way as to be engaged with the upper end of the rear portion (5) of the fender and vice versa.

-1-

The present invention relates to a fender-fairing structure, particularly effective for tractor semitrailers.

As it is well known, tractor semitrailers comprise a tractor thereto there is coupled, by means of an articulating fifth wheel, the semitrailer which latter may be detached from the tractor as it is required.

In order to facilitate the latching and unlatching operations of the semitrailer to/from the tractor, the rear wheel fender is open at the top and, more specifically, it consists of a front portion and a rear portion which are respectively located at the front and rear of the wheel, thereby the upper part of the latter is substantially free.

As the tractor semitrailer is driven with the semitrailer coupled to the tractor, the semitrailer itself practically acts as a fender for the rear wheel, since it is located at a reduced spacing above said rear wheel.

On the other hand, a problem is originated as the tractor is driven without the semitrailer.

Infact,in that case,the rear wheel remains
unprotected since any suitable fender structure
is available.

Due to that reason,and especially in the
rain,great amount of water are upwardly projected by the rear wheels of the tractor,thereby
reducing the visibility field of the following
vehicles,with consequent overtaking difficulties
by the latter.

Another drawback is moreover that,under the
mentioned conditions,great amounts of mud are
projected on the articulating fifth wheel,which
has to be accurately cleaned before coupling the
semitrailer to the tractor.

Accordingly,the task of the present invention
is to overcome the thereinabove mentioned
drawbacks,by providing such a fairing-fender
structure which is specifically designed for
protecting the rear wheels of a tractor and the
like,and which affords the possibility of being
easily removed,as the semitrailer is coupled
thereto,and engaged as the tractor is to be driven
without the semitrailer.

Within that task, it is a main object of the present invention to provide such a fairing-fender structure which, while affording the possibility of being mounted quickly and simply, is so designed as to provide a suitable and reliable protection, thereby preventing water and mud from being upwardly projected as the tractor is driven with the semitrailer disengaged.

Yet another object of the present invention is to provide such a fairing-fender structure which is of very reduced size, thereby, in the non-use condition, it is not necessary to remove or store parts of said structure.

Yet another object of the present invention is that of providing such a fairing-fender structure which is highly competitive from a mere economical standpoint.

According to one aspect of the present invention, the above task and objects, as well as yet other objects which will become more apparent thereinafter, are achieved by a fairing-fender structure, particularly for tractors of tractor semitrailers, characterized in that it comprises a flexible plate like element effective to be arranged above each rear wheel of said tractor, said plate like member being effective to be wound from a winder device as supported at the upper end of the rear wheel fender-front portion and being effective to be engaged with the upper end of the rear portion of said fender and vice versa.

Further characteristics and advantages of the invention will become more apparent hereinafter from the following detailed description of a preferred embodiment thereof,being illustrated,by way of an indicative but not limitative example,in the accompanying drawings,

where:

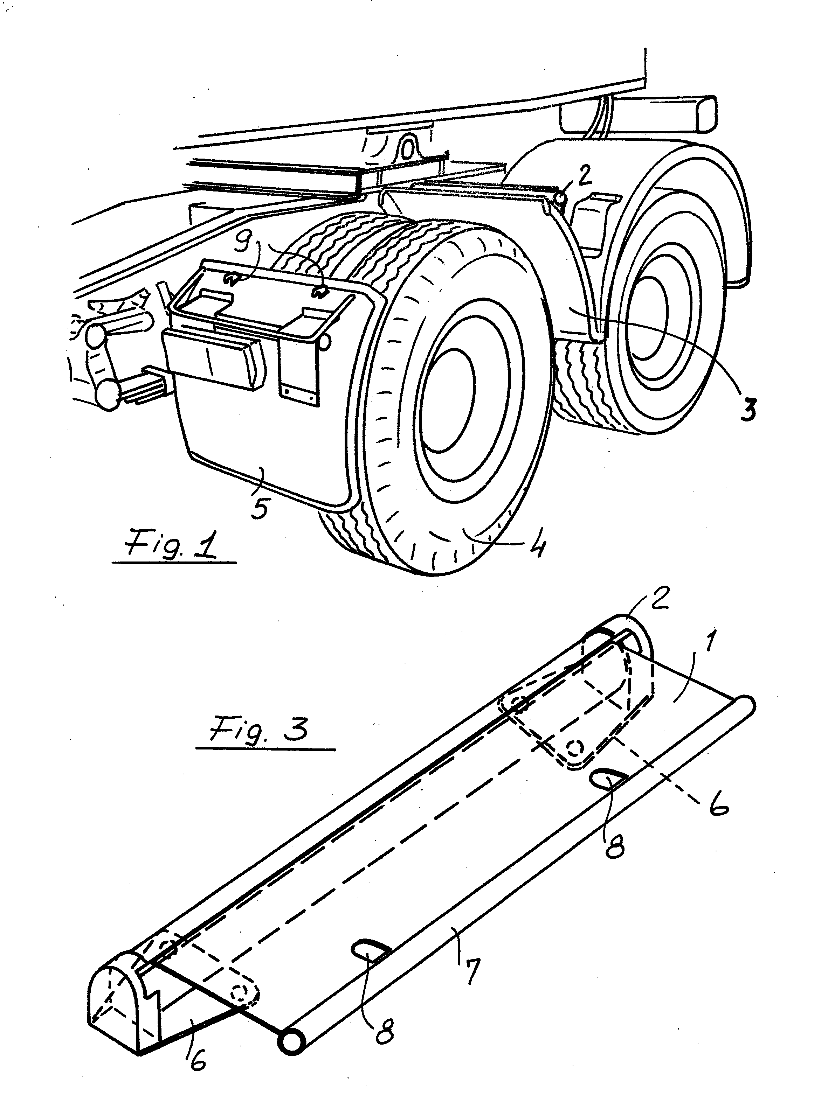

fig.1 schematically illustrates the

tractor of a tractor semitrailer with the fairing fender structure removed from the rear wheel of the tractor;

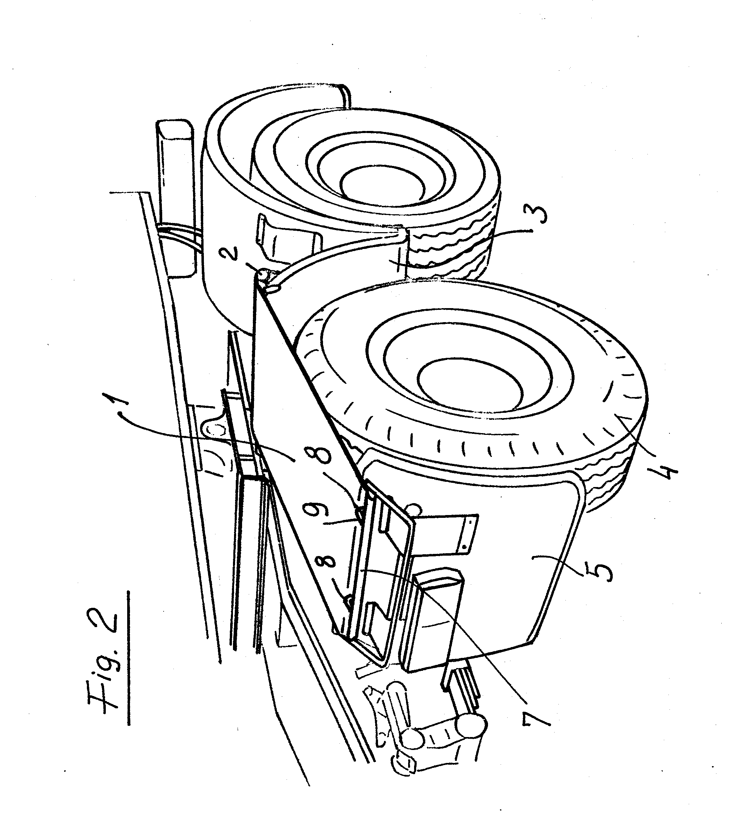

fig.2 schematically illustrates the tractor of a tractor semitrailer with the fairing-fender structure applied to the rear wheel;and

fig.3 schematically illustrates the winder device associated with the plate like element forming said fairing-fender structure.

0121641

With reference to the figures of the accompanying drawings, the fairing-fender structure for tractors of tractor semitrailers according to the present invention, comprises a plate like element 1, made from a flexible or resilient material, and having a suitable strength and thickness in such a way as to be able of resisting, without any damages, against projection of solid bodies and rocks.

The mentioned plate like element 1 may be unwound from a winder device 2, which latter is preferably of the automatic rewinding type: thus, on the unwound plate like element will act in any case a resilient return force which is effective to maintain it in a stretched condition above the wheel, at the region included between the front portion 3 of the fender of the rear wheel 4 and the rear portion thereof, indicated at 5.

More specifically, the winder device 2 is provided, at the two ends whereof, with ears 6 for fixing said device at the upper or top end of the fender front portion 3.

At its end projecting from said winder device 2, the resilient plate like member 2 is provided with a rigid cross bar 7, to facilitate the engaging and driving of said resilient plate like element.

Moreover, at one end thereof, the plate like element 1 is provided with a window pair 8, provided for engaging with hook members 9 as formed at the upper end of the fender rear portion 5.

The fairing-fender structure according to the present invention may be used in a very simple way, which will be clear from the above disclosure.

More specifically, as the tractor is to be used without the semitrailer, the user has to simply withdraw, by means of the cross bar 7, the resilient plate like element 1 from the winder device 2, in such a way as to engage the windows 8 with the hook members 9; thus the plate like element 1 will be arranged, in a stretched condition, above the rear wheel 4, thereby acting as an efficient shield against projection of water, solid materials and the like.

As the semitrailers is to be coupled to the tractor,the user will disengage the windows 8 from the hook members 9:thus the mentioned plate like element 1 will be automatically rewind by the winder 2,thereby the semitrailer may be easily coupled to the tractor.

The above also applies in the case therein the winder device 2 is coupled to the fender rear portion and the hook members are provided at the front portion thereof.

From the above disclosure it should be noted that the invention fully achieves the intended objects.

In particular it should be noted that the provision of a flexible or resilient plate like member,having a suitable thickness and which may be automatically rewound by the winder device, affords the possibility of making a fairing-fender structure for a tractor rear wheels which is effectively a practical one and which does not obstruct in any ways the semitrailer coupling and disengaging operations.

Moreover the very reduced size of the winder and its quick coupling to the fender afford

-8-

the possibility of applying it to any types of tractor semitrailer.

The invention as disclosed is susceptible to several modifications and variations, all whereof fall within the scope of the inventive idea.

Moreover all of the details may be replaced by technically equivalent elements.

0121641

- 9 -

<u>C L A I M S</u>

1- A fairing-fender structure,particularly for
tractors of tractor semitrailers,characterized
in that it comprises a flexible plate like
element (1) effective to be arranged above each rear
wheel (4) of said tractor,said plate like
element (1) being effective to be unwound from
a winder device (2) as supported at the upper
end of the rear wheel fender front portion (3)
and being effective to be engaged with the
upper end of the rear portion (5) of said
fender and vice versa.

2- A fairing-fender structure,particularly for
tractors of tractor semitrailer,according to
claim 1,characterized in that said winder
device (2) is of automatic type.

3- A fairing-fender structure,particularly for
tractors of tractor semitrailer,according to
claim 1,characterized in that said plate like
element (1) is provided,at the free end whereof,
with a stiffening cross bar (7) effective to act
as a gripping member from withdrawing said plate
like member (1) from said winder (2).

4- A fairing-fender structure,particularly for tractors of tractor semitrailers,according to claim 1,characterized in that said winder device (2) is provided,at the side ends whereof, with ear members (6) for fixing said winder to the rear fender.

5- A fairing-fender structure,particularly for tractors of tractor semitrailers,according to claim 1,characterized in that said plate like element (1) is provided,at the withdrawable end whereof,with windows (8) effective to be engaged with hook members (9) as formed on said fender rear portion (5).

6- A fairing-fender structure,particularly for tractors of tractor semitrailers,according to claim 1,characterized in that said plate like element (1) is provided with such a thickness and strength as to be able of resisting against projection of solid bodies,such as rocks and the like.

7- A fairing-fender structure,particularly for tractors of tractor semitrailers,according to the preceding claims,and substantially as disclosed and illustrated for the intended objects.

Fig. 1

Fig. 3

Fig. 2

European Patent
Office

**EUROPEAN SEARCH REPORT**

0121641

Application number

EP 83 83 0075

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 424 170 (FIAT)<br><br>* Page 3, lines 26-33; page 4, lines 26-28; figures 1,2,5 * | 1,3,6, 7 | B 62 D 25/18 |
| | --- | | |
| A | GB-A- 214 538 (FORTY)<br>* Page 2, lines 25-29, 41-45; figures 1,2 * | 2,5 | |
| | --- | | |
| A | US-A-1 882 592 (HENDRICKSON)<br>* Page 1, lines 58-64; figures 1,2 * | 4 | |
| | --- | | |
| A | FR-A-2 082 354 (FICHET) | | |
| | ----- | | TECHNICAL FIELDS SEARCHED (Int. Cl. ³)<br><br>B 62 D 25/16<br>B 62 D 25/18<br>B 60 J 1/20 |

The present search report has been drawn up for all claims

| Place of search<br>THE HAGUE | Date of completion of the search<br>29-11-1983 | Examiner<br>OSBORNE J. |
|---|---|---|